# EUROPÄISCHE PATENTANMELDUNG

(11) **EP 2 267 351 A1**
(43) Veröffentlichungstag der Anmeldung: **29.12.2010**
(21) Anmeldenummer: 10166245.0
(22) Anmeldetag: 17.06.2010
(51) Int. Cl.: F16L 59/02, F16L 59/16, F17C 1/12, F17C 3/04, F24H 1/18

(54) **Isolierhülle**

(30) Priorität: 18.06.2009 AT 9392009
(71) Anmelder: Lambda One Isoliertechnik GmbH, 4551 Ried Im Traunkreis (AT)
(72) Erfinder: Schwaiger, Meinhard, 4040, LINZ (AT); Politsch, Dieter, 4552, WARTBERG/KREMS (AT)
(74) Vertreter: Babeluk, Michael

(57) **Zusammenfassung**

Die gegenständliche Erfindung bezieht sich auf ein verbessertes thermisches Isoliersystem für Behälter (1) mit mehreren aneinander gereihten Isolierelementen, die aus einer Isolierschicht (2), einem Außenmantel (3) und einem nahezu stufenlos ineinander verschiebbarem Verschlusssystem (4, 5) bestehen, so dass eine vollständige und enganliegende Isolierschicht hergestellt werden kann.

## Beschreibung

Die Erfindung betrifft ein modulares Isoliersystem für Behälter mit mehreren Isolierelementen gemäß dem Oberbegriff von Patentanspruch 1.

Thermische Isolatoren werden beispielsweise für Heißwasserbehälter verwendet und sind u.A. aus der Fachliteratur bekannt. Dazu zählen beispielsweise die EP 1 860 384, die ein mehrteiliges Isolationssystem beschreibt, das aus Elementen mit Standardabmessungen, bestehend aus Isolierkörper mit Folienaußenmantel, mittels "Nut und Feder" aneinander gesteckt, aufgebaut ist. Dies hat zur Folge, dass mittels der aus festen Abmessungen bestehenden Isolationselemente nur ein ganzzahliges Vielfaches der Elementabmessungen den Umfang des zu isolierenden Behälters umschreiben kann. Aufgrund von fertigungsbedingten Toleranzen der Behälter und Isolierungen liegt die Isolierung nicht vollständig auf dem zu isolierenden Behälter bzw. Rohrkörper auf, so dass "Luftspalte" entstehen. Diese Luftspalte zwischen dem Isoliermantel und dem zu isolierenden Behälter führen zur Ausbildung von Luftzirkulationen und somit zu einem verstärkten Wärmetransport und in weiterer Folge zu einer Verringerung der Isolationswirkung. Ähnliche Nachteile weisen auch die Isolierungen gemäß DE 195 10 820, FR 25 770 09, US 4,640,437 und EP 0 117 388 auf. Höchste thermische Isolierwirkungen sind mit Isolierkörpern aus Polyurethan-Hartschaumstoffen gefolgt von Polyurethan-Weichschaumstoffen erreichbar.

Dem Stand der Technik entsprechen Weichschaumisolierungen, Hartschaumisolierungen, Isolierungen aus weichen Vliesstoffen und Isolierungen aus einer Kombination dieser Werkstoffe. Weichschaumisolierungen weisen eine offenzellige Schaumstruktur auf, die eine Wärmezirkulation ermöglicht und deshalb eine gegenüber Hartschaum vergleichsweise geringere Isolierwirkung erzielen lässt. Beste Isolierwirkungen bei vorgegebener Dicke der Isolierung sind mit Isolierungen aus PU-Hartschaum möglich, der eine geschlossenfellige Struktur aufweist. Die Wärmeleitfähigkeit λ [W/mK] ist abhängig von der Schaumstruktur, der Porengröße, dem Raumgewicht, den verwendeten Treibmitteln und dem Alterungsprozess. Unmittelbar nach Herstellung der Schaumstoffisolierung weisen geschlossenfellige Hartschaumisolierungen die besten Isolierwerte (die niedrigste Wärmeleitfähigkeit) auf, da die verwendeten Treibmittel eine wesentlich geringere Wärmeleitfähigkeit als Luft haben (λLuft ∼ 26 mW/mK; λPentan ∼ 12 mW/mK - 15 mW/mK), weil es infolge von Diffusionsvorgängen zu einem teilweisen Austausch von Treibmitteln und Luft in den Schaumzellen kommt. Weiters entsprechen dem Stand der Technik sogenannte Vakuum-Isolier-Platten (VIP) aus Hartschaumstoff, die in einem speziellen Fertigungsverfahren vollständig luftdicht mit einer Außenhülle aus Kunststofffolie umschlossen werden und der Innenraum unter Vakuum gesetzt wird (z.B. Isolation von Kühlmöbeln). Derart hergestellte Isolierungen sind für Boiler etc. deshalb nicht geeignet, weil ein nachträgliches Bearbeiten mittels Bohrwerkzeugen (z.B. für die Herstellung der Ausnehmungen für Armaturenanschlüsse) nicht möglich ist.

Aufgabe der gegenständlichen Erfindung ist es, ein Isoliersystem für Behälter unterschiedlicher Größe zur Verfügung zu stellen, das aus Systemelementen mit wenigen gleichbleibenden Abmessungen besteht, wirtschaftlich hergestellt, gelagert und montiert werden kann, über einen geschlossenen Außenmantel verfügt und über eine gegenüber dem Stand der Technik höhere Isolierwirkung verfügt.

Diese Aufgabe wird erfindungsgemäß durch ein Isoliersystem der eingangs erwähnten Art durch die Merkmale von Patentanspruch 1 gelöst. Insbesondere, ist vorgesehen, dass die Verschlusselemente als Verschlussleisten ausgebildet sind, die an Rändern des Außenmantels befestigbar sind und Rastverschlüsse aufweisen.

Wesentlich ist, dass ein kompletter Isoliermantel aus mehreren vorgeformten Einzelelementen zusammengefügt wird. Die Verbindung jeweils benachbarter Elemente erfolgt dabei auf eine besondere Art und Weise, bei der das nachfolgende Element an das vorhergehende Element überlappend aneinandergereiht und mittels eines Verschlusssystems lückenlos aneinandergekoppelt wird. Die vorgeformten Einzelisolierelemente sind aus einem festen Isolationsmaterial hergestellt und können daher nicht an abweichende Krümmungsradien oder Behälterdurchmesser durch Biegen o.Ä. angepasst werden. Zur Vermeidung von Zwischenräumen infolge abweichender Krümmungsradien auf der Innenseite des Isolationselements und der Außenwand des zu isolierenden Behälters wird auf besondere Art und Weise begegnet. In einer ersten Ausführungsvariante wird auf der Innenseite des Isolierelementes der Isolationshartschaum in einer erhabenen Rillen-, Gitter- bzw. Wabenstruktur ausgebildet. Bei der Montage des Isolierelementes auf dem zu isolierenden Behälter/Rohr werden dann diese feinen erhabenen Strukturen plastisch derart deformiert, dass die Isolierelemente letztendlich den zu isolierenden Behälter/Rohrkörper derart dicht umschließen, dass eine Luftzirkulation verhindert wird. In einer weiteren bevorzugten Ausführungsvariante wird eine zweite Isolierschicht aus weichem, elastischem Isolierwerkstoff (Weichschaum) auf die Kontaktfläche (Innenfläche) des Isolierelements aufgebracht, wobei der Innendurchmesser kleiner als der Außendurchmesser des zu isolierenden Behälters/Rohres gewählt wird, damit nach der vollständigen Montage der Isolierelemente auf dem Behälter/Rohr der ansonsten verbleibende Hohlraum vollständig mit unterschiedlich stark deformiertem Weichschaum ausgefüllt ist. Auf diese Weise können auch jene Hohlräume zuverlässig ausgefüllt werden, die infolge unterschiedlicher Wärmeausdehnungen des Behälters/Rohres und der Isolierung bei Temperaturschwankungen entstehen. Der zur Isolation verwendete Hartschaum weist eine vergleichsweise niedrige Raumdichte auf, damit eine geringere Wärmeleitfähigkeit und somit höhere Isolierwirkung erreicht werden kann. Je geringer die Raumdichte des Hartschaums, desto geringer wird die Festigkeit des Strukturelementes. Damit die erforderliche Druckfestigkeit der Hartschaumisolierung erreicht werden kann, wird ein besonderes Herstellverfahren angewendet. Der Hartschaum wird direkt auf die Innenseite der Außenfolie aufgebracht (verschäumt), so dass eine Verbundstruktur aus Außenfolie und Hartschaum entsteht, die eine ausreichende Druckfestigkeit der Isolierung nach außen ergibt. Da die Druckfestigkeit in direktem Verhältnis zur Raumdichte eines Hartschaums steht, sind zur Erhöhung der Druckfestigkeit der Isolierung weitere Maßnahmen vorgesehen, wie z.B. die Erhöhung des Raumgewichtes des Hartschaums in der Kontaktschicht bzw. die Zugabe von Verstärkungen (Glasfasern, Wabenkarton, ...) o.Ä. im Kontaktbereich des Schaumstoffes mit der Außenfolie.

Auf diese Weise können Behälter mit Hartschaumisolierungen vollständig thermisch isoliert und sämtliche üblicherweise vorhandenen Toleranzen und Spalte zwischen dem Behälter und der Isolierung infolge Temperaturänderungen des thermisch zu isolierenden Gutes, ausgeglichen werden. Die Isolierung weist ein geringes Gewicht und eine hohe Isolationswirkung bei gleichzeitig hoher Druckfestigkeit nach außen auf.

Wichtig im Rahmen der Erfindung ist auch, dass der Außenmantel an beiden Enden in Umfangsrichtung Endfalze aufweist, die in Verschlussleisten und formschlüssig in Widerlagern und verhakt sind. Dadurch können die Isolierschalen besonders einfach miteinander verbunden werden.

Ein vorgeformtes Isolierelement besteht zumindest aus der eigentlichen Isolierschicht, der Außenhülle und dem Verschlusssystem. Die Außenhülle besteht aus elastischem Material wie z.B. Kunststofffolie (PVC, PS, PU, PP, PE, ...) mit einer Schichtdicke von vorzugsweise einem halben bis mehreren Millimetern. Das Isolierelement, besteht aus z.B. PU-Hartschaumstoff. Die Schichtstärke des Isolierelementes beträgt mehrere Zentimeter, vorzugsweise 25 mm bis 200 mm, abhängig vom jeweiligen Anwendungsfall, wobei zur Erhöhung der Druckfestigkeit die Schichtstärke der Verstärkungszone vorzugsweise im Bereich von nur wenigen Millimetern liegt und die Schichtstärke der verformbaren Kontaktzone vorzugsweise im Bereich von einem bis zu 10 mm liegt.

In einer bevorzugten Ausführungsvariante der Erfindung ist vorgesehen, dass in der Isolierschicht ein zweites Isoliermaterial vorliegt, das im Fertigungsprozess als loses Material eingebracht worden ist, vorzugsweise in der Form von Flocken aus Schaumstoff oder getränktem Papier.

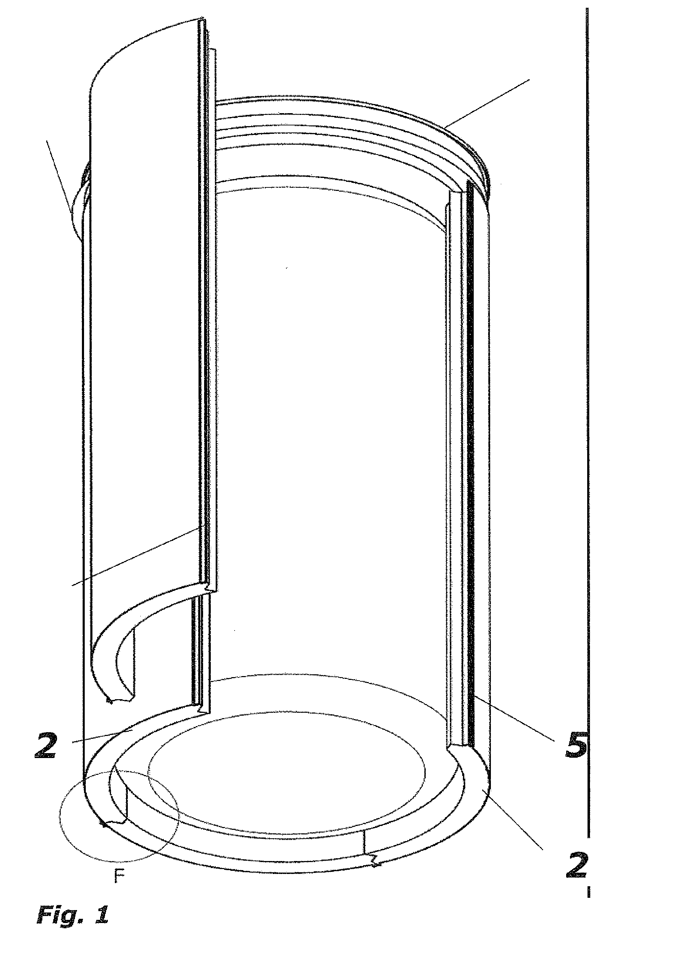

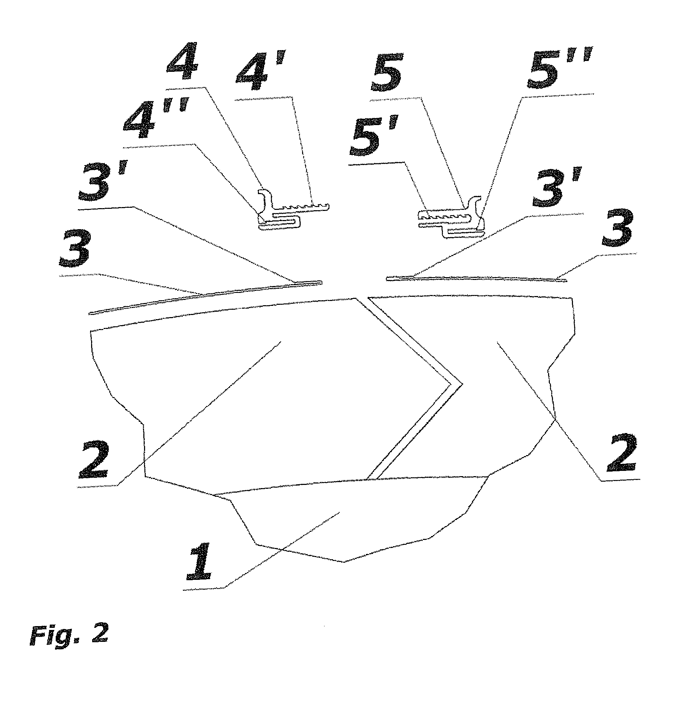

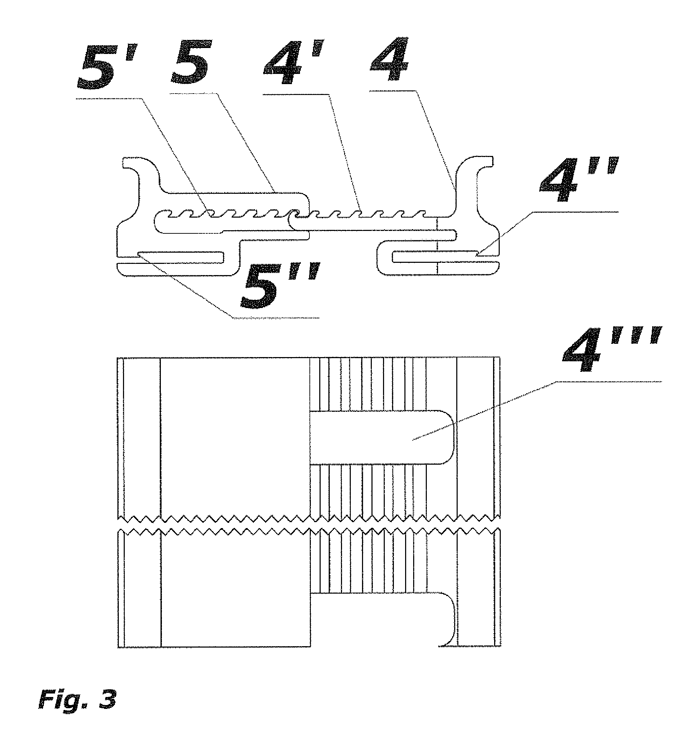

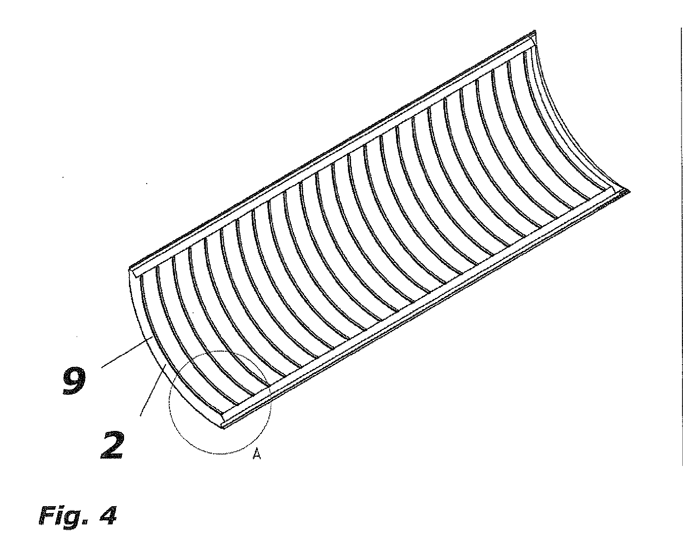

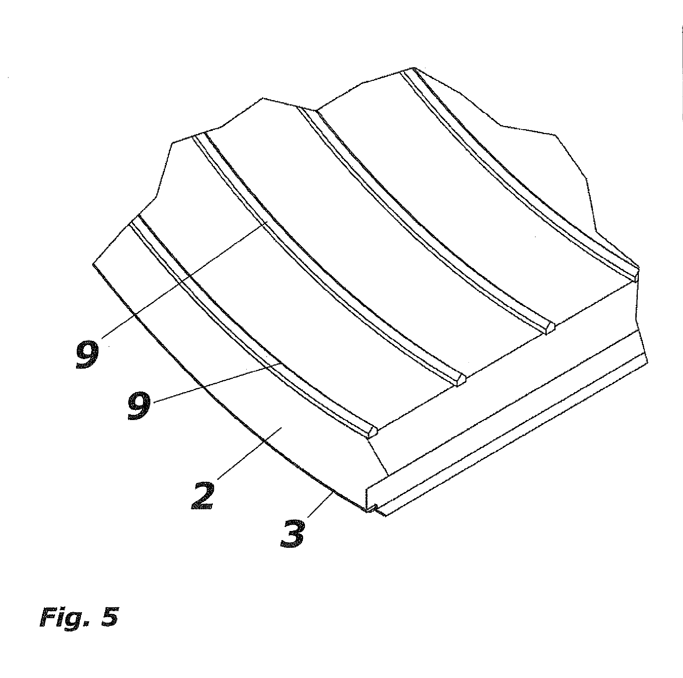

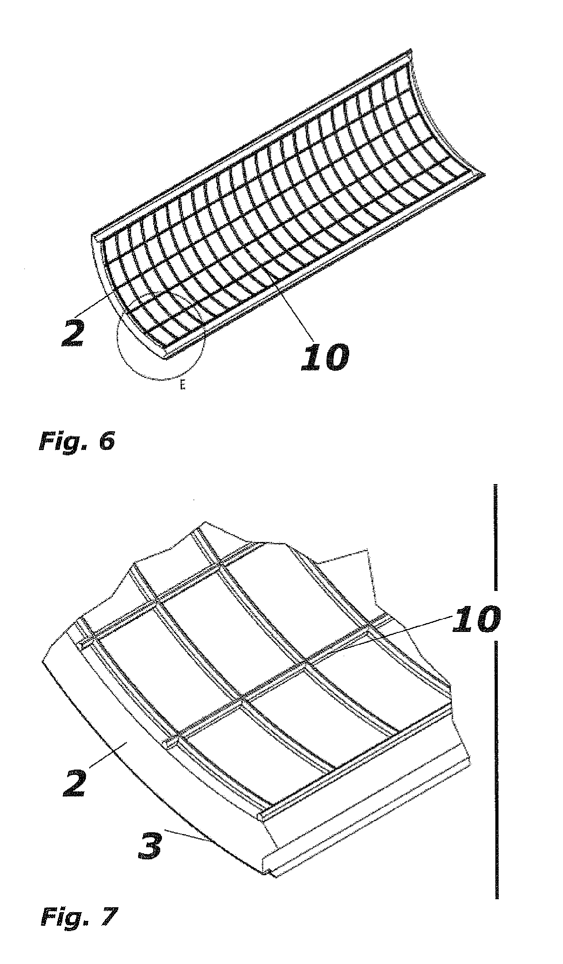

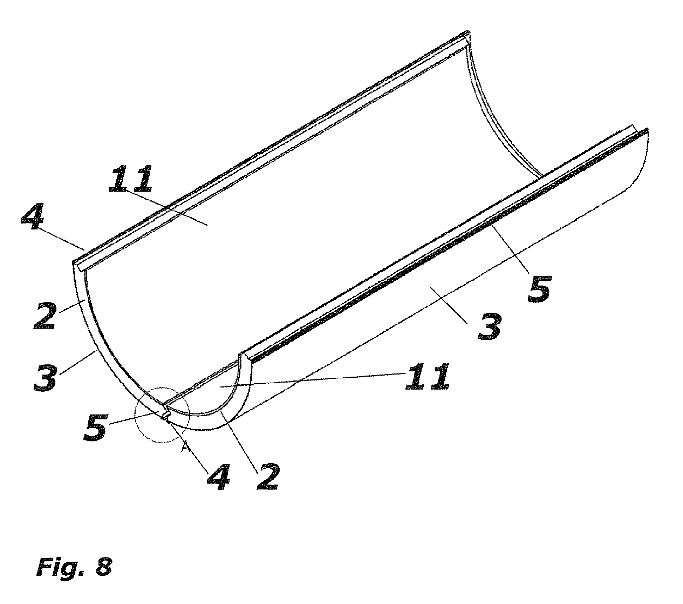

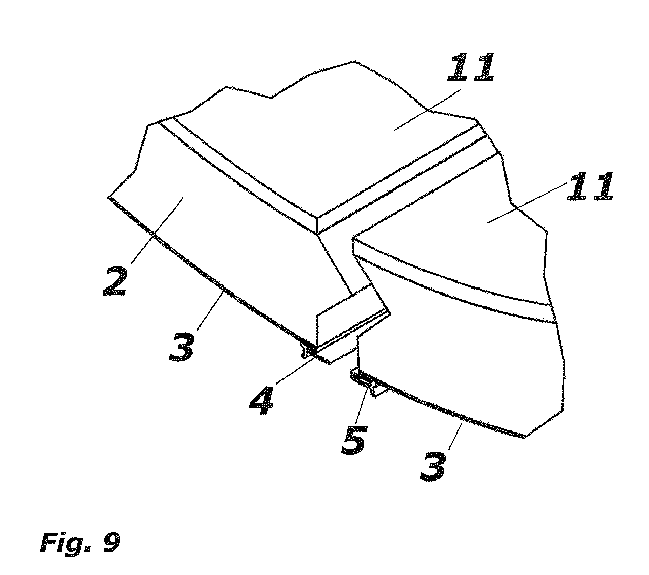

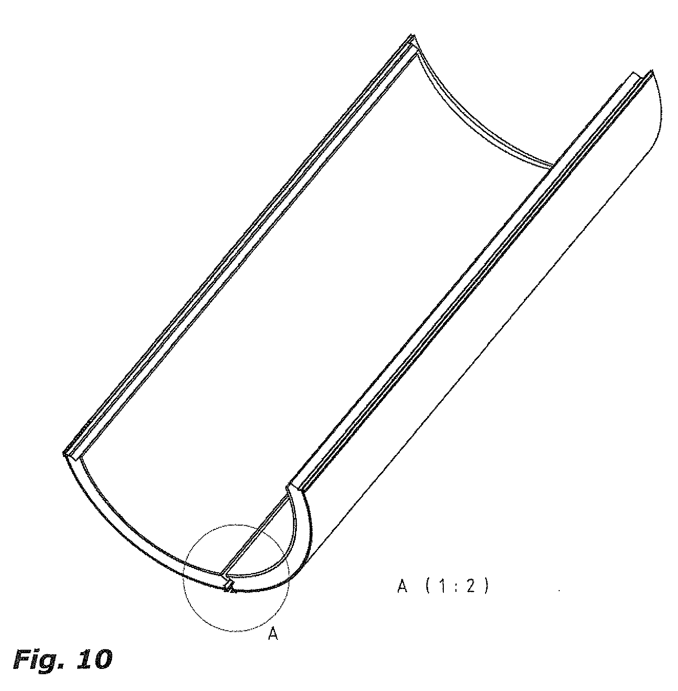

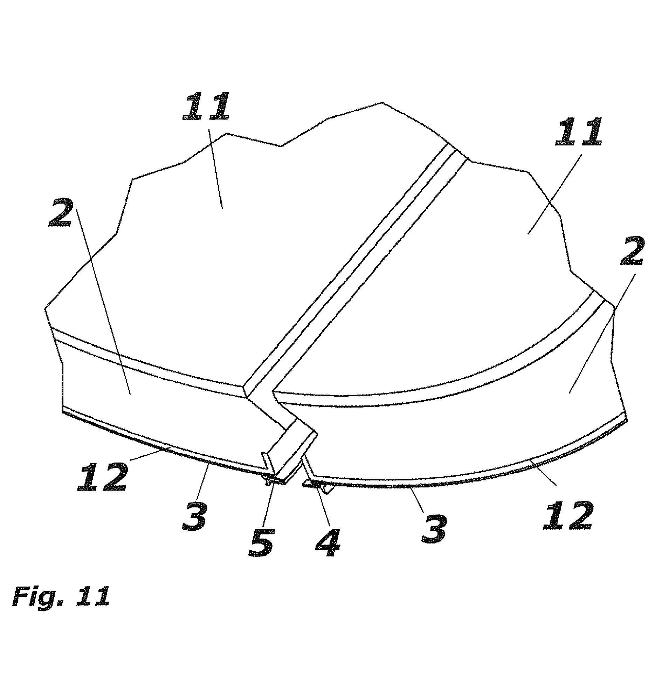

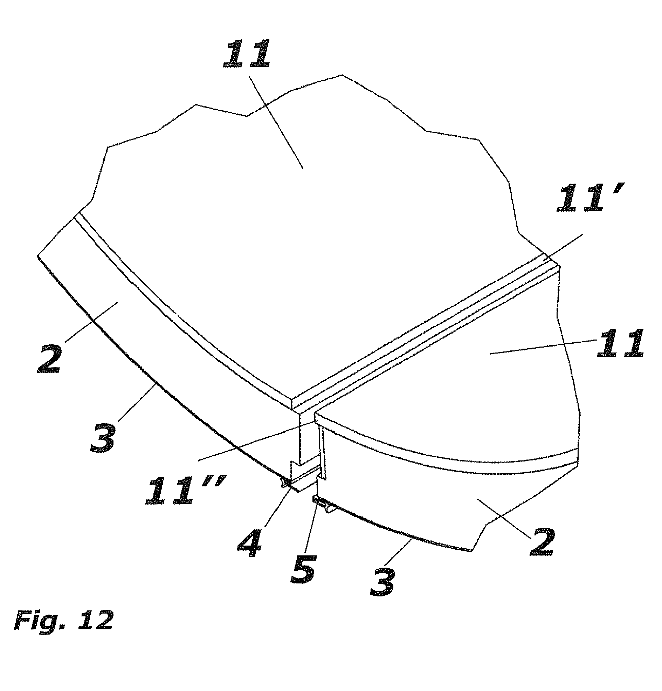

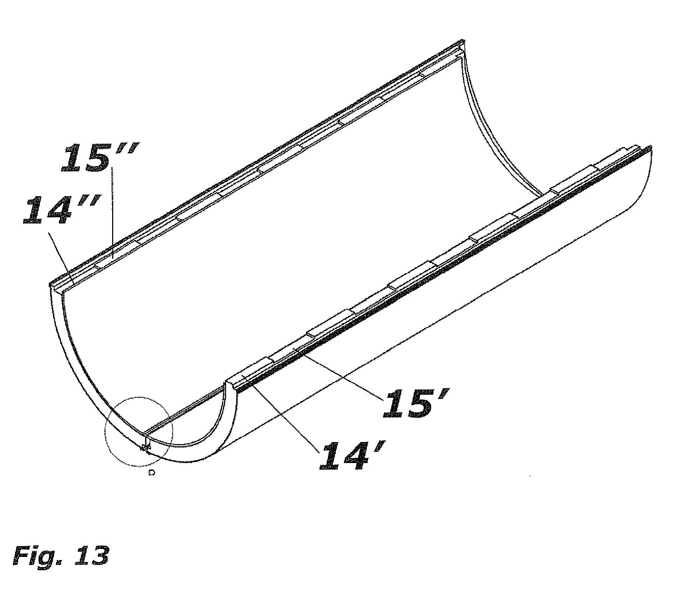

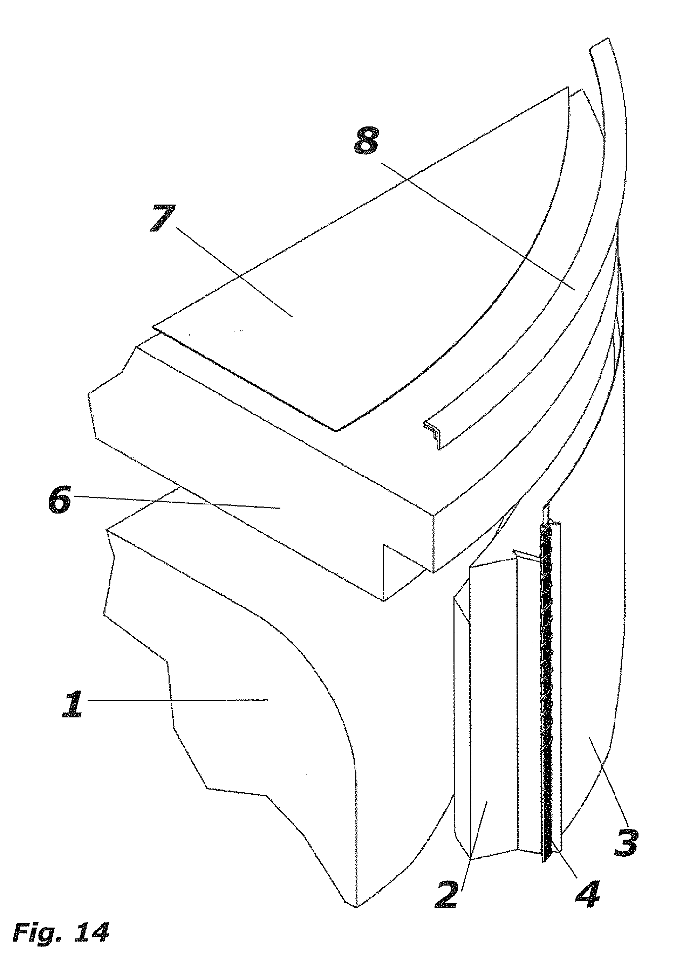

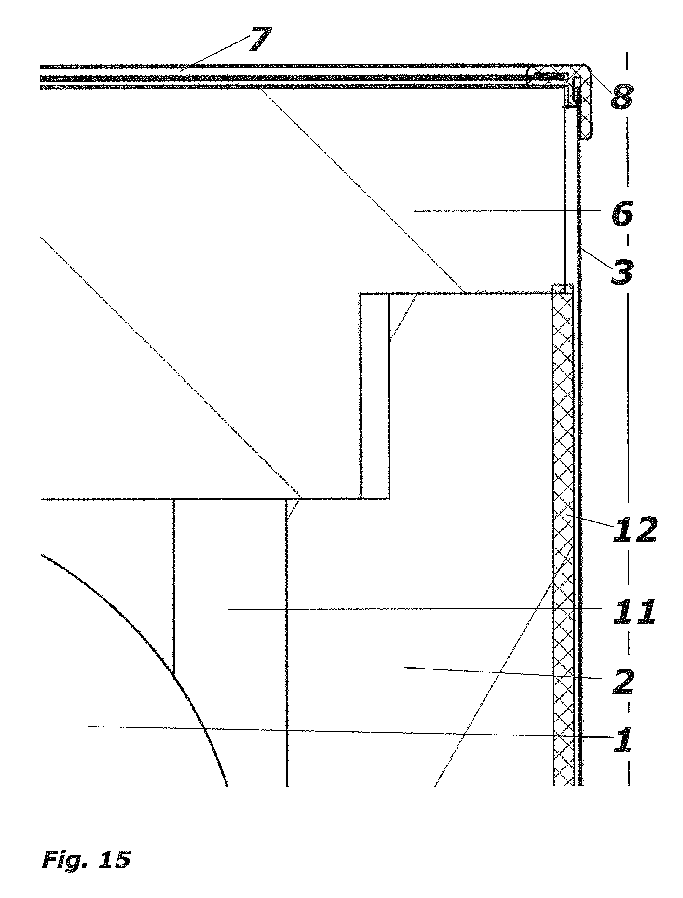

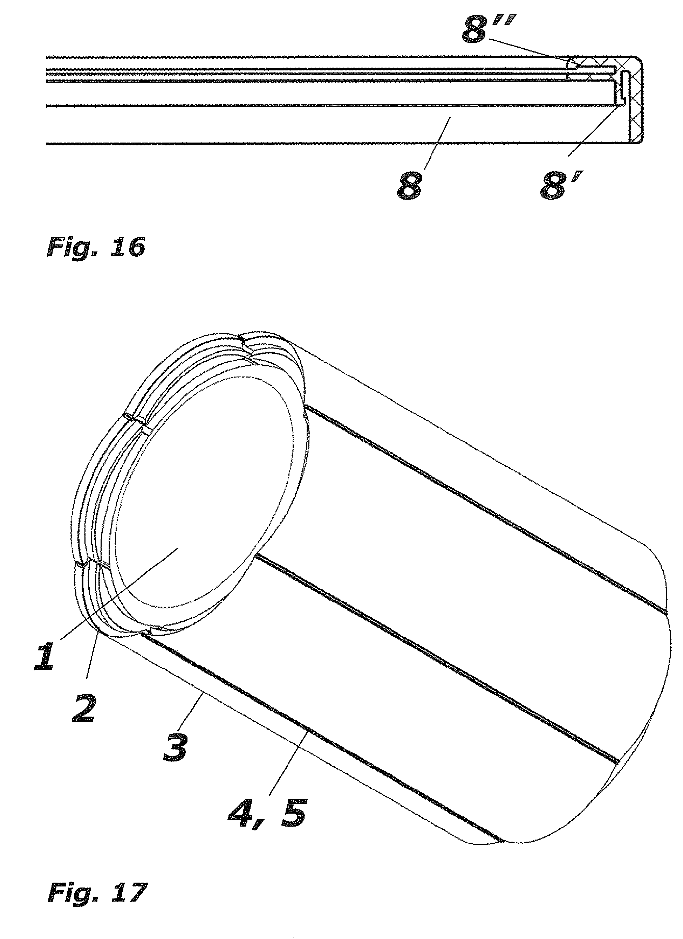

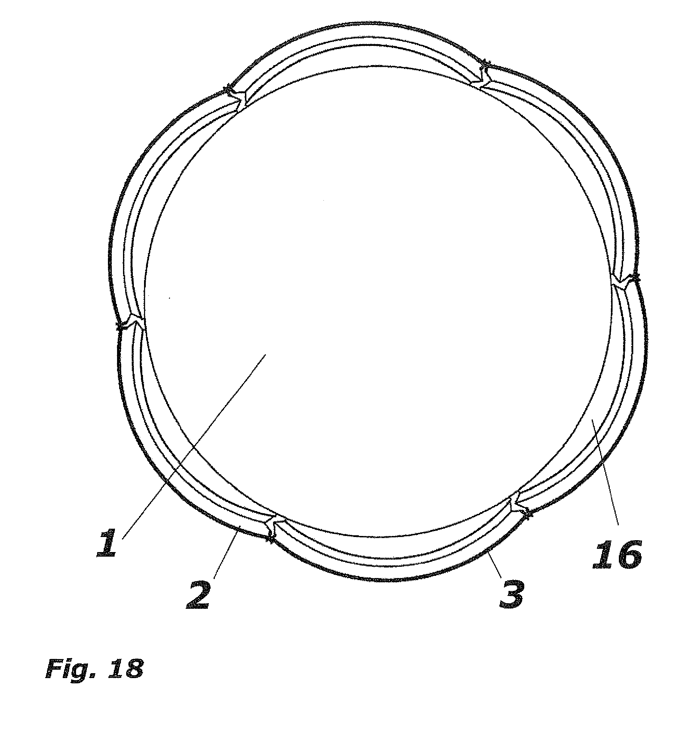

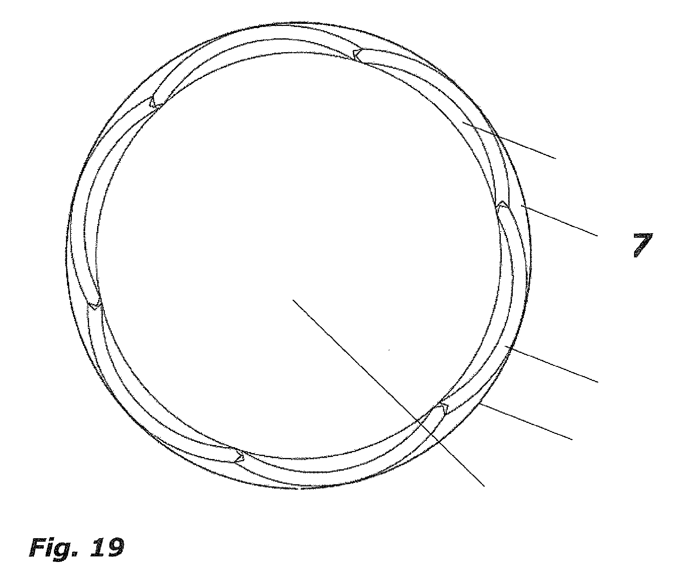

Die Erfindung wird anhand der Figuren 1 bis 19 näher erläutert. Die Fig. 1 bis Fig. 19 zeigen jeweils unterschiedliche Ausführungsvarianten der Erfindung in axonometrischen Darstellungen.
Fig. 1 zeigt eine Gesamtansicht eines Behälters 1 mit einer teilweise aufgebrachten Isolierung, bestehend aus mehreren Isolierelementen 2, mit dem Außenmantel 3 und dem Verschlusssystem, bestehend aus den ineinander steckbaren Verschlussleisten 4 und 5, dem Schaumstoffdeckel 6, dem Foliendeckel 7 und dem elastischen Abschlussprofil 8.
Fig. 2 zeigt eine Detaildarstellung des bevorzugten nahezu stufenlos justierbaren Verschlusssystems, bestehend aus den Verschlussleisten 4 und 5. Die umgeknickten Endfalze 3' des Außenmantels 3 werden in den Verschlussleisten in den Widerlagern 4" und 5" verhakt. Anschließend werden die beiden Verschlussleisten 4 und 5 ineinandergeschoben, bis der Außenmantel vollständig die Isolierschicht umspannt; gegen selbsttätiges Lösen sind die die Verschlussleisten mittels einer Gegenverzahnung 4' und 5' gesichert.
Fig. 3 zeigt eine bevorzugte Ausführungsvariante des Verschlusssystems, bestehend aus den Verschlussleisten 4 und 5 mit zusätzlichen Ausnehmungen 4"' in zumindest einer der beiden Verschlussleisten 4 oder 5 zur Erhöhung der Biegeelastizität in Verschlussrichtung. Damit ist eine verbesserte Angleichung des Außenmantels an die exakte Kontur des Behälters mit der aufgebrachten Isolierschicht möglich.
Fig. 4 zeigt eine Ausführungsvariante der Isolierung mit einer Rippenstruktur 9 in der Kontaktfläche zum Behälter.
Fig. 5 zeigt eine Detaildarstellung der Isolierung mit einer Rippenstruktur 9 von Fig. 4; die spitz zulaufende Rippenstruktur wird bei der Montage der Isolierung auf den Behälter plastisch deformiert und verhindert damit die Entstehung von Luftspalten und einer Luftzirkulation.
Fig. 6 zeigt eine Ausführungsvariante der Isolierung mit erhöhter Isolierwirkung durch Ausbildung einer Gitter- oder Wabenstruktur 10 in der Kontaktfläche zum Behälter.
Fig. 7 zeigt eine Detaildarstellung der Isolierung mit einer Gitter- oder Wabenstruktur 10 von Fig. 6; die spitz zulaufende Gitter- oder Wabenstruktur wird bei der Montage der Isolierung auf den Behälter plastisch deformiert und verhindert damit die Entstehung von Luftspalten und einer Luftzirkulation.
Fig. 8 zeigt eine Ausführungsvariante einer Isolierung mit erhöhter Isolierwirkung, ausgeführt mit einer elastisch verformbaren Isolierschicht 11 aus z.B. Weichschaum.
Fig. 9 zeigt eine Detailansicht einer Isolierung mit erhöhter Isolierwirkung von Fig. 8, bestehend aus der Außenhülle 3, der Isolierschicht 2, den Verschlussleisten 4 und 5 und der elastisch verformbaren Isolierschicht 11.
Fig. 10 zeigt eine Ausführungsvariante einer Isolierung mit erhöhter Isolierwirkung und erhöhter Festigkeit.
Fig. 11 zeigt eine Detailansicht einer Isolierung mit erhöhter Isolierwirkung und erhöhter Festigkeit, bestehend aus der Außenhülle 3, der Isolierschicht 2, den Verschlussleisten 4 und 5, der elastisch verformbaren Isolierschicht 11 und einer höherfesten Verstärkungsschicht 12, zwischen der Außenhülle 3 und der Isolierschicht 2.
Fig. 12 zeigt eine Ausführungsvariante einer Isolierung mit erhöhter Isolierwirkung infolge Überlappung 11' und 11" der elastisch verformbaren Isolierschicht 11 sowie einer elastischen Zwischenlage 13 in der Fügefläche benachbarter Isolierelemente.
Fig. 13 zeigt eine Ausführungsvariante einer Isolierung mit erhöhter Isolierwirkung, bei der benachbarte Isolierelemente mittels einer Art Verzahnung 14' und 14" bzw. 15' und 15" derart aneinandergereiht werden, dass eine Luftzirkulation im Kontaktspalt benachbarter Isolierelemente zuverlässig verhindert werden kann.
Fig. 14 zeigt in einer Detaildarstellung eines Schnittbildes in Explosionsdarstellung den Deckelanschluss einer Isolierung, bestehend aus dem Behälter 1, der Isolierschicht 2, der Außenhülle 3, der Verschlussleiste 4, dem Deckel aus Isolierschaumstoff 6, der Deckelfolie 7 um dem Verschlussprofil 8.
Fig. 15 zeigt in einer Detaildarstellung eines Schnittbildes den Deckelabschluss einer Isolierung im zusammen gefügten Zustand, bestehend aus dem Behälter 1, der Isolierschicht 2, der Außenhülle 3, dem Deckel 6, der Deckelfolie 7, dem Verschlussprofil 8, der höherfesten Verstärkungsschicht 12 und der elastisch verformbaren Isolierschicht 11.
Fig. 16 zeigt das Verschlussprofil 8 mit der Öffnung 8' zum Aufschieben auf die Außenhülle 3 und der Öffnung 8" zum Aufschieben auf die Deckelfolie 7.
Fig. 17 zeigt eine besondere Ausführungsvariante einer Behälterisolierung aus "kleineren" Standardisolierungen für "übergroße" Behälter.
Fig. 18 zeigt die Behälterisolierung gemäß Fig. 17 bestehend aus dem Behälter 1, der Isolierschicht 2, der Außenhülle 3, den Verschlussleisten 4 und 5 sowie der elastischen Ausgleichsschicht 16.
Fig. 19 zeigt eine Behälterisolierung für Großbehälter 1, bestehend aus Isolierelementen mit elastischen Ausgleichselementen auf der Innenseite 16 und Außenseite 17 und einer Außenhülle 3.

## Patentansprüche

1. Modulares Isoliersystem für Behälter (1) mit mehreren Isolierelementen, die aus einer Isolierschicht (2), einem Außenmantel (3) und aus Verschlusselementen bestehen, **dadurch gekennzeichnet, dass** die Verschlusselemente als Verschlussleisten (4) und (5) ausgebildet sind, die an Rändern des Außenmantels (3) befestigbar sind und Rastverschlüsse aufweisen und dass der Außenmantel (3) an beiden Enden in Umfangsrichtung Endfalze (3') aufweist, die in Verschlussleisten (4) und (5) formschlüssig in Widerlagern (4") und (5") verhakt sind.

2. Modulares Isoliersystem nach Anspruch 1, **dadurch gekennzeichnet, dass** die Isolierelemente aus vorgeformten festen Isolierstoffen bestehen.

3. Modulares Isoliersystem nach einem der Ansprüche 1 oder2, **dadurch gekennzeichnet, dass** die Rastverschlüsse als Verzahnungen (4', 5') ausgebildet sind, die vorzugsweise nahezu stufenlos ineinandergeschoben werden können.

4. Modulares Isoliersystem nach einem der Ansprüche 1 bis 3, **dadurch gekennzeichnet, dass** zumindest eine der beiden Verschlussleisten (4) und (5) zusätzliche Ausnehmungen (4"') zur Erhöhung der Biegeelastizität in Verschlussrichtung aufweist.

5. Modulares Isoliersystem nach einem der Ansprüche 1 bis 4, **dadurch gekennzeichnet, dass** als Isoliermaterial Schaumstoff aus PU, PVC oder PS, vorzugsweise aus Recycling-Material, vorgesehen ist.

6. Modulares Isoliersystem nach einem der Ansprüche 1 bis 5, **dadurch gekennzeichnet, dass** der Außenmantel (3) aus Folienmaterial wie z.B. PVC, PP oder PE bzw. aus Leichtmetall oder aus Stahlblech gefertigt ist

7. Modulares Isoliersystem nach einem der Ansprüche 1 bis 6, **dadurch gekennzeichnet, dass** die Isolierelemente aus Verbundmaterial bestehen, vorzugsweise aus einem Außenmantel (3), der direkt mit der Isolierschicht (2) durch Verklebung oder Direktverschäumung verbunden ist.

8. Modulares Isoliersystem nach einem der Ansprüche 1 bis 7, **dadurch gekennzeichnet, dass** die Isolierschicht (2) aus geschlossenzelligem Hartschaum mit niedriger Raumdichte, vorzugsweise im Bereich von 10 kg/m³ bis 40 kg/m³ besteht.

9. Modulares Isoliersystem nach einem der Ansprüche 1 bis 8, **dadurch gekennzeichnet, dass** die Isolierschicht eine Schichtstärke von vorzugsweise im Bereich von 20 mm bis 200 mm aufweist.

10. Modulares Isoliersystem nach einem der Ansprüche 1 bis 9, **dadurch gekennzeichnet, dass** zur Erhöhung der Isolierwirkung und zur Vermeidung von Luftspalten zwischen der Isolierschicht (2) und dem Behälter (1) an der Innenseite der Isolierschicht (2) eine Rippenstruktur (9) oder eine Gitter- bzw. Wabenstruktur (10) vorgesehen ist, die plastisch bei der Montage derart deformierbar ist, dass Luftspalte infolge Toleranzen zuverlässig vermieden werden können.

11. Modulares Isoliersystem nach einem der Ansprüche 1 bis 10, **dadurch gekennzeichnet, dass** zur Erhöhung der Festigkeit des Isolierelements eine Verstärkungsschicht (12) zwischen der Außenhülle (3) und der Isolierschicht (2) vorgesehen ist, die vorzugsweise eine Schichtstärke von wenigen Millimetern aufweist und aus höherfestem Hartschaumstoff oder aus Fasereinlagen oder eingeschäumtem Wabenkarton besteht.

12. Modulares Isoliersystem nach einem der Ansprüche 1 bis 11, **dadurch gekennzeichnet, dass** zur Erhöhung der Isolierwirkung eine Überlappung (11') und (11") der elastisch verformbaren Isolierschicht (11) und/oder eine elastische Zwischenlage (13) in der Fügefläche benachbarter Isolierelemente vorgesehen ist.

13. Modulares Isoliersystem nach einem der Ansprüche 1 bis 12, **dadurch gekennzeichnet, dass** die radialen Verbindungsflächen der Isolierelemente eine Profilierung aufweisen, die vorzugsweise als Verzahnung (14') und (14") bzw. (15') und (15") ausgebildet ist.

14. Modulares Isoliersystem nach einem der Ansprüche 1 bis 13, **dadurch gekennzeichnet, dass** an einer Stirnseite des Behälters (1) ein Deckel aus Isolierschaumstoff (6) mit einer Deckelfolie (7) vorgesehen ist, der über ein Verschlussprofil (8) mit dem Außenmantel (3) verbunden ist, wobei das Verschlussprofil (8) vorzugsweise mit einer Öffnung (8') zum Aufschieben auf die Außenhülle (3) und einer Öffnung (8") zum Aufschieben auf die Deckelfolie (7) ausgeführt ist.

15. Modulares Isoliersystem nach einem der Ansprüche 1 bis 14, **dadurch gekennzeichnet, dass** an der Innenseite und/oder der Außenseite der Isolierelemente elastische Ausgleichsschichten (16, 17) vorgesehen sind.
